# EUROPEAN PATENT APPLICATION

(11) **EP 4 147 955 A1**
(43) Date of publication of application: **15.03.2023**
(21) Application number: 21196083.6
(22) Date of filing: 10.09.2021
(51) Int. Cl.: B62H 5/00, B62H 5/02, B62H 5/04, B62K 3/00, B60R 25/021, B60L 53/68, G06Q 10/02, G06Q 50/30, G07C 5/00, G07C 9/00

(54) **VEHICLE**

(71) Applicant: TIER Mobility SE, 10785 Berlin (DE)
(72) Inventor: Zajac, Mariusz, 30-350 Krakow (PL); Zarów, Jan, 30-694 Krakow (PL); Kucharczyk, Michal, 30-633 Krakow (PL)
(74) Representative: Zimmermann & Partner Patentanwälte mbB

(57) **Abstract**

A vehicle (1000), comprising: a vehicle control unit comprising a wireless interface; a steering means (500); an electronic sensor unit (4); a locking motor (2); locking means (100) for the steering means (500); wherein the vehicle (1000) comprises a frame (600) and a wheel (650) having a rotating axle (660), wherein an orientation of the rotating axle is controlled by a rotation of the steering means (500); wherein the vehicle control unit is configured to energize the locking motor (2) with a battery current upon a receiving of an unlocking signal by the wireless interface; wherein the locking motor (2) comprises a driving shaft (3) and is configured to move the locking means (100) from a locked to an unlocked configuration; wherein, the locking means (100) is configured to block the rotation of the steering means (500) in the locked configuration and to allow the rotation of the steering means (500) in the unlocked configuration.

## Description

### FIELD AND BACKGROUND

The present invention relates to a vehicle like, e.g., a bicycle, a bike, a scooter, a roller or a go-kart, particularly to an electrically driven scooter or an electrically driven bike, a so-called E-scooter or e-bike. These vehicles are sometimes referred as electric personal transportation vehicles.

Different locks and locking mechanism for vehicles are known for preventing unauthorized use of such vehicles. However, often they can easily be picked and therefore, do not really prevent theft or unauthorized use of the vehicle.

### BRIEF SUMMARY

In view of the above, a vehicle according to claim 1 is suggested, which comprises locking means integrated within the frame of the vehicle. Further, a method for operating a shared vehicle and using the vehicle is suggested.

Particularly, according to an embodiment, a vehicle is suggested, comprising:
- a vehicle control unit comprising a wireless interface;
- steering means;
- an electronic sensor unit;
- a locking motor;
- locking means for the steering means;
   wherein the vehicle comprises a frame and a wheel which is rotatable on, i.e. rotates around an axle, an orientation of which is controlled by a rotation of the steering means;
   wherein the vehicle control unit is configured to energize the locking motor with a battery current upon a receiving of an unlocking signal by the wireless interface;
   wherein the locking motor comprises a driving shaft and is configured to move the locking means from a locked to an unlocked configuration;
   wherein, the locking means is configured to block the rotation of the steering means in the locked configuration and to allow the rotation of the steering means in the unlocked configuration.

Further, a method for operating said vehicle is suggested, comprising:
- providing said vehicle;
- receiving, by the wireless interface, an unlocking signal;
- energizing, by the vehicle control unit, the locking motor and initiating a rotation of the driving shaft of the locking motor; and
- switching the locking means of the vehicle from the locked state to the unlocked state.

Furthermore, a method of sharing said vehicle among a group of users is suggested, comprising:
- providing at least one of said vehicle;
- sending a request for rental by a qualified user to a server;
- obtaining an unlocking signal by the wireless interface of the vehicle control unit send by the server;
- energizing the locking motor of the locking means to switch from a locked configuration of the locking means comprising a blocked rotation of the steering means to an unlocked configuration of the locking means comprising a free rotation of the steering means;
- detecting a sensor signal pattern by an electronic sensor unit corresponding to the unlocked configuration;
- signaling, to the user, a start of a rental;
- ending the rental and switching the locking means from the unlocked configuration in the locked configuration.

Advantageously, the above embodiments allow to reliably prevent burglary or unauthorized use of such vehicles.

### BRIEF DESCRIPTION OF THE DRAWINGS

A full and enabling disclosure of the present invention, including the best mode thereof, to one of ordinary skill in the art, is set forth more particularly in the remainder of the description, including reference to the accompanying figures.
Figure 1 shows schematically some details of a vehicle.
Figure 2 shows an embodiment of locking means 100 for steering means 500 like, e.g., a handlebar 550 as described in more detail further below.
Figure 3 shows schematically the locking means 100 mounted inside the frame 600 of a vehicle 1000 with respect to the ground - in a virtual vertical cut (A), a virtual horizontal cut (B) and its mounting (C).
Figure 4 shows the locking means 100 mounted inside the frame 600 of a vehicle 1000, a view along the cutting plane BB (see arrows) and the outer contour of the printed circuit board (PCB) with marked positions of three position sensors (1), (2), and (3).
Figure 5 illustrates two configurations of the locking means: "ready to latch" - A and "locked" - B.
Figure 6 illustrates a feature of the locking means 100 which allows protection of the locking means 100 against overload, i.e. against damage in case of vandalism.
Figure 7 illustrates a feature of the locking mechanism which allows preventing a spontaneous self-locking during a normal ride, e.g. on a bumpy ground.
Figure 8 illustrates an embodiment comprising an alternative attachment of the toothed collar 520 to the steering shaft 510 comprising a compression spring 530 and a race 540 comprising interlocking structures 545.
Figure 9 shows examples of interlocking structures for one embodiment of the locking means 100 comprising a toothed collar 520, a compression spring 530, a race 540, and a spacer 537.
Figure 10 corresponds to Fig. 4.
Figure 11 corresponds to Fig. 5 and illustrates the configuration "ready to latch" and "locked" as already described for the previous embodiment.
Figure 12 illustrates an embodiment of the overload safety feature by application of a compression spring between a rotatable toothed collar and a race fixed to the steerer tube 510.
Figure 13 illustrates said overload safety feature by application of a compression spring between a rotatable toothed collar and a race and shows the changed position of the fork with respect to the frame.
Figure 14 corresponds to Figure 7.

In the following detailed description, reference is made to the accompanying figures, which form a part hereof, and in which are shown by way of illustration specific embodiments and features of the invention. It is to be understood that other embodiments may be utilized and structural or logical changes may be made without departing from the scope of the present invention. The following detailed description, therefore, is not to be taken in a limiting sense, and the scope of the present invention is defined by the appended claims.

### DETAILED DESCRIPTION

The use of the word "a" or "an" when used in conjunction with the term "comprising" in the claims and/or the specification may mean "one," but it is also consistent with the meaning of "one or more," "at least one," and "one or more than one."

The use of the term "or" in the claims is used to mean "and/or" unless explicitly indicated to refer to alternatives only or the alternatives are mutually exclusive, although the disclosure supports a definition that refers to only alternatives and "and/or."

As used in this specification (above and below) and claims, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The technical object of the described embodiments is to provide a vehicle with locking means integrated within a head tube of the vehicle's frame in order to prevent unauthorized use of a corresponding bike, scooter, roller or go-kart.

Although at first glance it may appear that the locking means described herein and its interaction with the locking motor, cam, electronic sensor unit, and other details are adapted only to steering means of said vehicles, it may equally well be used in combination with other rotatable means, such as a rudder of a ship or boat. Other applications may include fittings or valves used to regulate a fluid flow.

According to an embodiment a vehicle is suggested, comprising:
- a vehicle control unit comprising a wireless interface;
- steering means;
- an electronic sensor unit;
- a locking motor;
- locking means for the steering means;
   wherein the vehicle comprises a frame and a wheel which is rotatable on, i.e. rotates around an axle, an orientation of which is controlled by a rotation of the steering means;
   wherein the vehicle control unit is configured to energize the locking motor with a battery current upon a receiving of an unlocking signal by the wireless interface;
   wherein the locking motor comprises a driving shaft and is configured to move the locking means from a locked to an unlocked configuration;
   wherein, the locking means is configured to block the rotation of the steering means in the locked configuration and to allow the rotation of the steering means in the unlocked configuration.

Advantageously, the vehicle is protected against unauthorized use and theft. This is especially significant for rental vehicles.

According to an embodiment the locking means are configured to switch from the unlocked configuration into a ready-to-latch configuration, wherein the ready-to-latch configuration switches to the locked configuration upon the rotation of the steering means. In other word, the locking means can be transitioned from one configuration into another.

Advantageously, locking is achieved by a simple movement of the handlebar relative to the vehicle frame. This is easily achieved without electric current at the start of an unauthorized drive.

According to an embodiment the electronic sensor unit is further configured to transmit a status signal about a current configuration of the locking means to the wireless interface of the vehicle.

Advantageously that allows remote management of the vehicle which is important for the vehicle's rental.

According to an embodiment the steering means comprises a handle piece and a shaft connected to the axle, wherein the shaft is rotatable connected with the frame and carries a toothed collar (cogged wheel) which can be blocked by a locking lever of the locking means, wherein the locking lever comprises a recess for receiving a teeth of the toothed collar or cogged wheel.

Advantageously, the toothed collar and the locking lever can be arranged at a defined level and hence allow a compact design of the locking mechanism.

According to an embodiment the cam is eccentrically attached to the driving shaft, and a position of the eccentrically attached cam triggers a movement of the locking lever from the locked configuration to the unlocked configuration upon receipt of the unlocking signal by the electronic sensor unit.

Advantageously that allows remote management of the vehicle which is important for the vehicle's rental.

According to an embodiment the eccentrically attached cam and/or the locking lever comprise a magnet, wherein a position of the magnet and thus a position of the corresponding cam and/or locking lever is detectable by a sensor of the electronic sensor unit and thus, the arrangement of cam and lever is adapted to allow detecting a configuration of the locking means.

Advantageously, this allows for remote acquisition of a lock's status.

According to an embodiment said sensor is a Hall sensor, which is located on a printed circuit board of the electronic sensor unit within a housing of the locking means.

Advantageously, Hall sensors are quite rugged and do not need a sophisticated electronic circuitry.

According to an embodiment the locking lever is movable in a plane which is orthogonally oriented with respect to a central axis of the shaft, i.e. parallel the toothed collar / cogged wheel.

Advantageously, such facilitates quick response of the locking lever and - appropriately shaped - allows withstanding substantial torques.

According to an embodiment the toothed collar (cogged wheel) comprises a plurality of teeth arranged in a circumferential direction around the steering shaft. According to embodiments typically from 3 to 20 teeth, preferably 8 teeth (cogs), may, optionally, be equidistantly arranged in a circumferential direction on the collar. They comprise an identical conical contour.

Advantageously, the locking and its strength is independent from a position of the handlebar / front wheel.

According to an embodiment the conical contour of the teeth at the collar and the recess of the locking lever are adapted to engage with each other.

Particularly, an angle formed by the flanks of a tooth is advantageously in the range of 5 to 30° degrees. This allows a reliable locking.

According to an embodiment a lever torsion spring is adapted to permanently push the locking lever towards the toothed collar, whereas in the unlocked configuration of the locking means a position of the eccentrically attached cam is configured to block an engagement of the recess with any of the teeth of the toothed collar. Particularly, an outer contour of the cam is shaped for pushing the locking lever away from the toothed collar against the force generated by the torsion spring, by rotation of the drive shaft by the locking motor.

This has the advantage that the lock reacts smoothly and at the same time is reliably protected against unintentional locking during a ride by an authorized user.

According to an embodiment the toothed collar is non-rotatable and directly joined with the steering shaft.

Advantageously, this enhances the strength of the locking.

According to an embodiment a race which is arranged adjacent to the toothed collar on the shaft is directly joined with the shaft, e.g. with several bolts, and a compression shaft spring is pressing a contact surface of the toothed collar against a contact surface of the race, while the toothed collar is rotatable with respect to the steering shaft. Therein the two adjoining contact surfaces comprise interlocking surface structures.

Advantageously, this prevents mechanical damage to the locking mechanism if attempts are undertaken to ride a locked vehicle.

According to an embodiment said interlocking surface structures comprise protrusions and correspondingly shaped recesses, e.g. convex and concave structures, which are arranged in a circumferential direction on the contact surfaces of the toothed collar and of the race, respectively.

Advantageously, such designs are easy to manufacture and the corresponding elements of the locking mechanism can be replaced inexpensively if necessary.

According to an embodiment the projections comprise a shape selected from the group consisting of: a pyramid, a half-sphere, a cone, a triangular prism, and a bar, and the corresponding recesses are shaped such as to fittingly receive the protrusions.

Advantageously corresponding structures can easily be fabricated at low costs, e.g. by embossing.

According to an embodiment the vehicle is a battery driven electrical vehicle.

Advantageously, battery-powered electric vehicles are popular for short distances within an urban area.

According to an embodiment the axle on which the wheel rotates is held by a fork, and the fork is joined with the shaft.

Such construction is common to bicycles, bikes, and scooters.

According to an embodiment a method for operating a vehicle is suggested, comprising:
- providing a vehicle as described according to any of the embodiments above;
- receiving by the wireless interface an unlocking signal;
- energizing, by the vehicle control unit, the locking motor; and
- switching, by the locking motor, the locking means of the vehicle from the locked state to the unlocked state.

Advantageously, such method is useful with rental of a fleet of correspondingly equipped vehicles.

According to an embodiment a method of sharing the vehicle described above among a group of users is suggested, comprising:
- providing at least one of a vehicle as described by any of the above embodiments;
- sending a request for rental by a qualified user to a server;
- obtaining an unlocking signal by the wireless interface of the vehicle control unit send by the server;
- energizing the locking motor of the locking means to switch from a locked configuration of the locking means comprising a blocked rotation of the steering means to an unlocked configuration of the locking means comprising a free rotation of the steering means;
- detecting a sensor signal pattern by an electronic sensor unit corresponding to the unlocked configuration;
- signaling, to the user, a start of a rental;
- ending the rental and switching the locking means from the unlocked configuration in the locked configuration.

Advantageously, said method facilitates undisturbed and uninterrupted vehicle rental. In particular, signaling to the user, a start of a rental can include a message in an application on a mobile of the user or a visual signal on a display of the vehicle. The user may rent the vehicle until the rental is ended. When switching the locking means from the unlocked configuration in the locked configuration, another qualified user may send a request for rental and start another rental.

Each embodiment described above may be combined with any other of the described embodiments unless clearly indicated to the contrary.

A full and enabling disclosure of the present invention, including the best mode thereof, to one of ordinary skill in the art, is set forth more particularly in the remainder of the description, including reference to the accompanying figures.

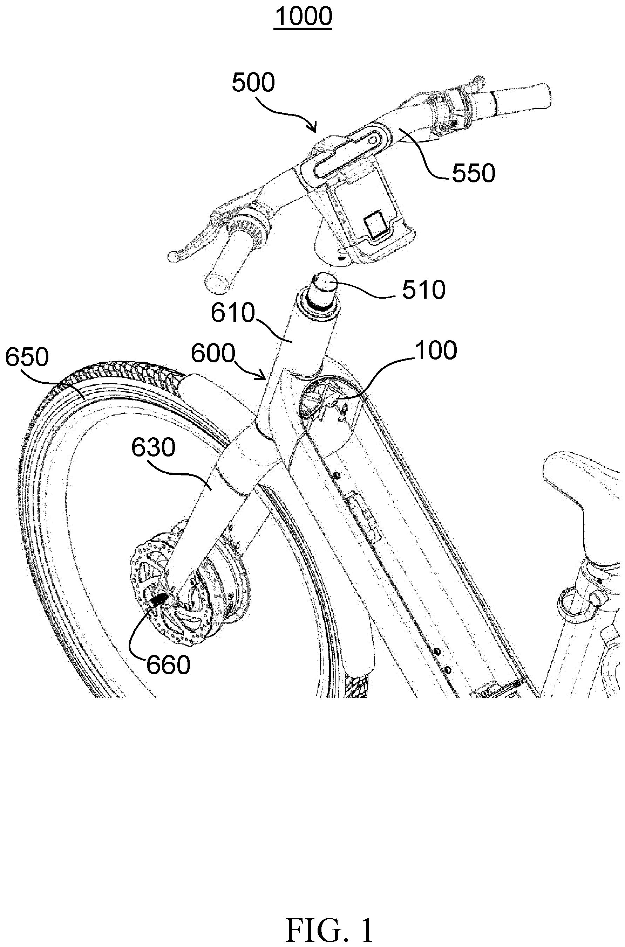

Fig. 1 shows steering means 500 of a vehicle 1000. The steering means 500 comprise a handle piece 550 and a steering shaft 510, wherein the handle bar 550 (piece) is detachable attached to the steering shaft 510. The steering means 500 optionally can comprise a handlebar stem as common, e.g. for bikes. The steering shaft 510 is rotatable connected with the frame 600 via a tube (head tube 610) and carries circumferential blocking means (not shown here) which can be locked with locking means 100. Further, Fig. 1 shows a wheel 650 running on an axle 660 which is connected to the frame 600 via a fork 630. The orientation of the steering means 500, i.e. the orientation of the axle 660 relative to a main plane defined by the main spatial extension of the frame 600 changes the direction of a movement of the vehicle 1000. The vehicle can naturally not be ridden, once the steering means 500 comprising the handle piece (handlebar) 510 is locked, i.e. made non-rotatable by the locking means 100.

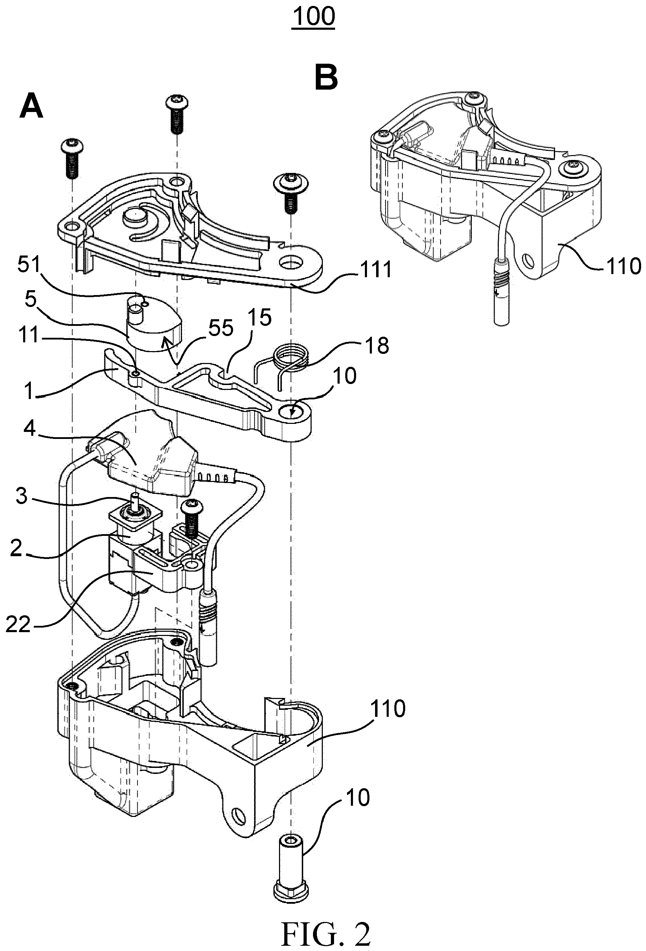

Fig. 2A is an expanded view of the locking means 100 comprising a housing 110 having a cap 111. Inside the housing a locking motor 2 is mounted, e.g. by a locking motor clamp mount. Its drive shaft 3 carries a cam 5. The cam is eccentrically attached to the drive shaft 3 of the locking motor 2. The drive shaft is held by a bushing in a corresponding bore of the housing. Depending on a degree of rotation of the drive shaft 3 the cam 5 pushes with its circumferential outer surface a lever of a trigger, i.e. a locking lever 1 of the locking means 100. The locking lever 1 is permanently pressed away from the steering shaft 510 which carries a toothed collar 520 or cogged wheel 520 by a torsion spring 18. In a locked state of the locking means 100 a recess 15 on a periphery of the locking lever 1 holds a teeth 521 of the toothed collar 520. The toothed collar 520 is attached to the steering shaft 510 and hence, will rotate inside the frame 600 depending on an orientation of the handle piece 550, e.g. a handlebar 550. The position of the locking lever 1 with respect to the toothed collar 520 is detected by detecting positions of a magnet 11 which is pressed in a bore at or near to an end of the locking lever 1. A suitable sensor, e.g. a Hall sensor H1, H2, H3, can be used for detection. Several corresponding sensors H1, H2, H3 are suitably arranged and mounted on a printed circuit board (PCB) of the electronic sensor unit 4. This PCB is arranged in a plane parallel to the pivoting plane of the locking lever 1 so that the sensors are located in the immediate vicinity of corresponding magnets in the positions of the locking lever 1 to be determined. The locking lever 1 has a hole at its other end and rotates on a rotational axis (pivot axis) 10 inside the housing 110. According to an embodiment the function of said axis 10 may be fulfilled by a threaded pin 10 which is used at once to hold two halves of the housing 110 together. Fig. 2B shows the complete locking means ready for mounting in a frame 600 of a vehicle 1000.

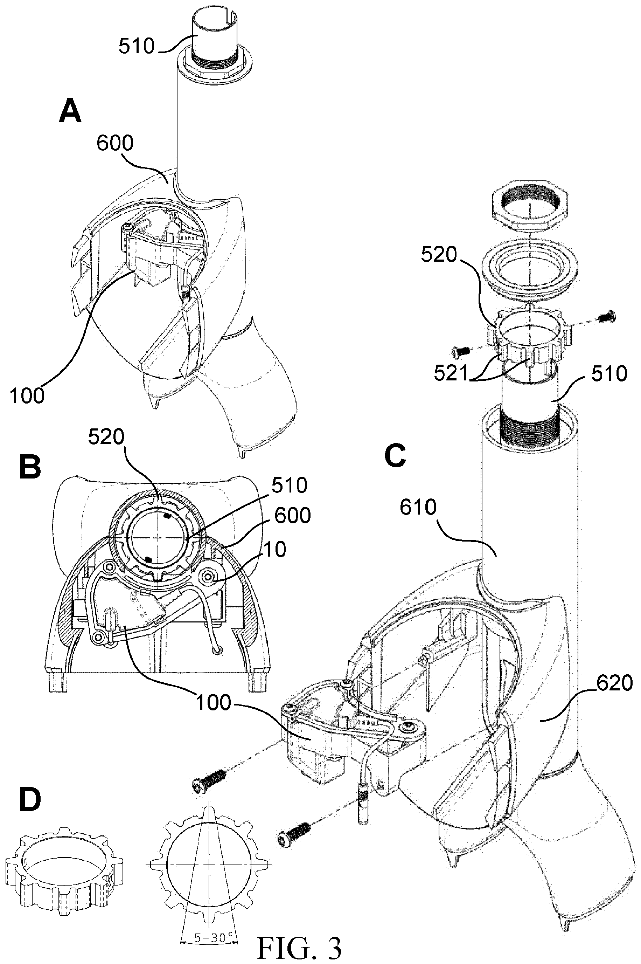

Fig. 3A shows a fragment of the frame 600 comprising the steering shaft 510 and the locking means 100, respective its housing 110. Fig. 3B shows a horizontal cut through this fragment of the frame 600 along a virtual plane above the locking means 100 across the toothed collar 520 on the steering shaft 510. As apparent, the locking lever 1 blocks the movement of the handlebar as the recess 15 makes direct contact with a teeth 521 of the toothed collar 520. The lock unit 100 is self-positioning thanks to a rounded face that is concentric to the axis of the steerer tube 510 after the bolts are tightened and positioning the walls of the housing 110 in front, that interlock with the cut-out in the head tube 610 . Fig. 3C shows the position of the rotatable steering shaft 510, the mounting of the toothed collar, e.g. by bolts, to the steering shaft 510 and a frontal part of the frame 600, i.e. the down tube 620 with an embodiment of the locking means 100 ready for insertion and mounting. The housing 110, 111, with the locking means 1, the locking motor 2, the cam 5, and the electronic sensor unit 4 within it, is attached in an enforced part of the down tube 620 appropriately, e.g. by two bolts. As can be seen, the steering shaft 510 rests on a bottom cup and bearing 535 and is attached above with a tightening nut 539 which is pressing the upper cup and bearing 536 together with the bushing spacer 537 towards the head tube 610 of the frame 600. Fig. 3D shows the toothed collar and an approximate angle of the surfaces of the teeth.

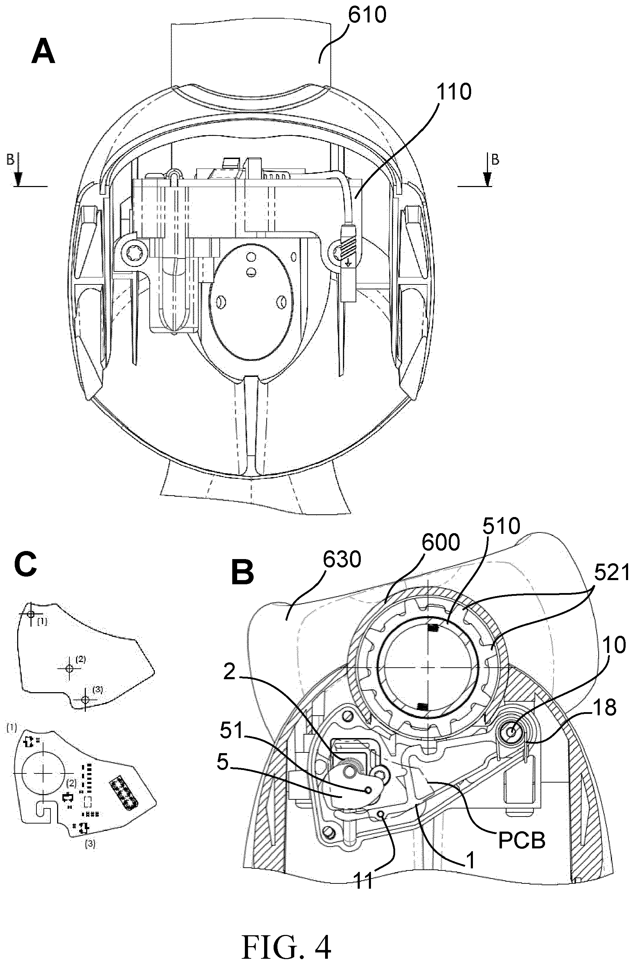

Fig. 4A shows a fragment of the frame 600 comprising the steering shaft 510 and the housing 110 of the locking means. Arrowheads B indicate a cutting plane BB, which is shown in Fig. 4B. As can be seen, the locking lever 1 of the locking means 100 is in an unlocked position, i.e. it is held by the cam 5 in such a way that a distance is maintained between the recess 15 in the locking lever 1 and the toothed collar 520 and its teeth 521. The contour of the PCB which is arranged above the plane in which both the cam 5 and the locking lever 1 are pivoted is also indicated. In the unlocked configuration shown, the locking lever 1 (trigger or pawl) is in an open position with steering means 500 and the fork 630 (the crown of the fork 630 is shown) free to rotate and the vehicle 1000 ready for riding. The Hall sensors on the PCB detect the locking motor cam 5 position to be open at position (2) and the locking lever 1 to be open at position (3). Fig. 4C shows the contour of the PCB with indicated positions (1), (2), and (3) of magnet sensors used to determine the current position of the locking lever 1 and cam 5 with respect to the magnet sensors. Particularly, two embodiments of the printed circuit board of the electronic sensor unit 4 are shown in Fig. 4C. According to an embodiment the lock 100 comprises two magnets: one attached to the cam 5, the second one attached to the locking lever (trigger, pawl). In order to acquire their positions three hall sensors can be arranged on a PCB of the electronic sensor unit 4 having, e.g., positions (1), (2), and (3). The sensor position (2) is shared between the magnets of the cam 5 and of the locking lever 1. Both magnets 51 and 11 can reach the same position. Thus, the position of the cam 5 corresponding to the unlocked, i.e. open position (2) or the position of the trigger (pawl) position (2) corresponding to the locked, i.e. closed state of the lock 100 are detected. The sensor position (1) can be reached only by the cam magnet 51, whereas the sensor position (3) can be reached only by the magnet 11 of the locking lever 1. The travel of the cam 5 is limited by a bumper. Lock open and lock ready to latch positions occur when the circumferential contact surface 55 of the cam 5 hits the front side of the bumper. The open, i.e. unlocked position of the lock 100 is reached when the bumper hits the back wall of the bumper. According to typical embodiments the power supply to the locking motor 2 can be cut-off after detecting a significant increase in current value, e.g. by the vehicle control unit (not shown) or after detecting the locked position (1) or the unlocked position (2) of the cam magnet 51.

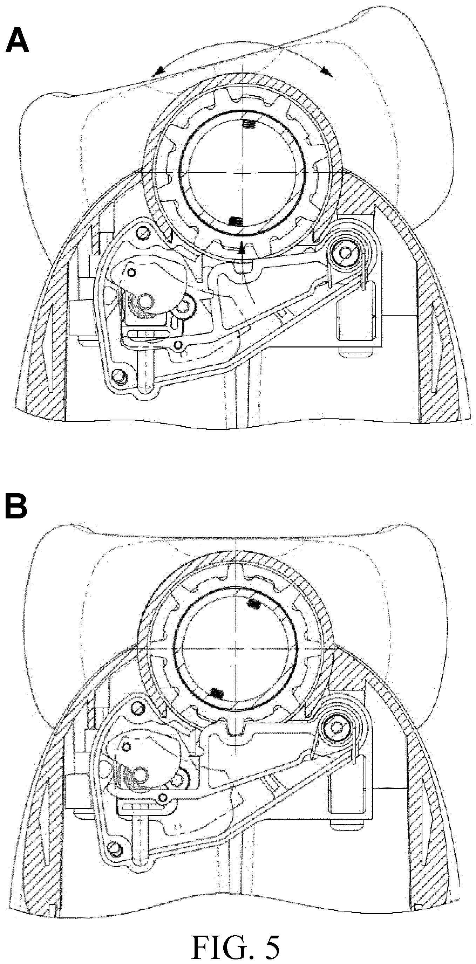

Particularly, in the configuration "ready to latch" shown in Fig. 5A the locking lever 1 and all other elements of the locking means 100 are ready to latch. The sensors on the PCB detect the cam 5 in a position indicating the closed state: compare position (1) in Fig. 4C. The torsion spring 18 of locking lever 1 forces the locking lever 1 to move clockwise. If the user rotates the steering means 500, i.e. the handlebar 550, the toothed collar 510 with steering shaft 510 rotates as well. If the position of the tooth matches with the recess 15 in the locking lever 1 the lock event occurs as shown in Fig. 5B. Synchronously the sensor on the sensor unit PCB detects the closed position (2) of the locking lever 1 by a jump of its magnet 11 from position (3) to position (2), whereas the magnet 51 of cam 5 is still in the closed position (1).

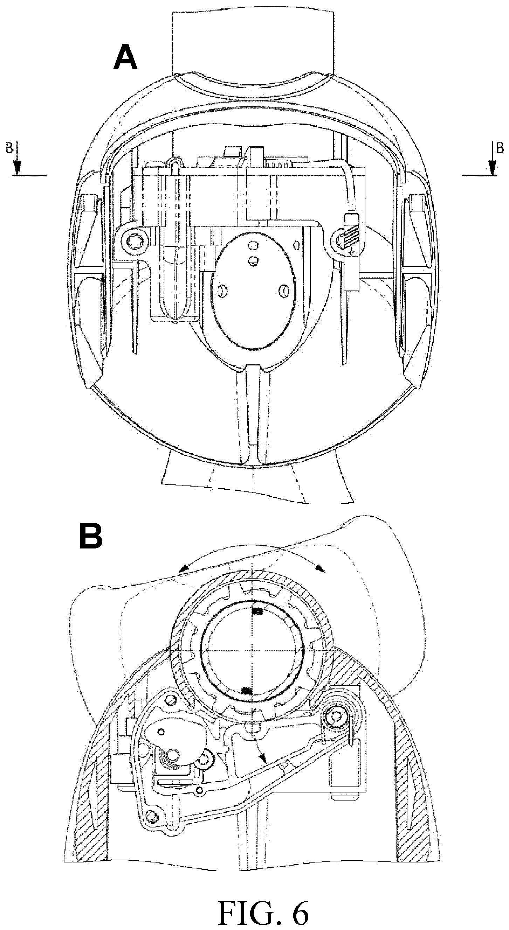

Fig. 6A illustrates the plane of a virtual cut along BB just above the locking lever 1 as shown in Fig. 6B. If extreme torque is applied to the handlebar 550, for example when the front wheel 650 is blocked, e.g. in a fence, a bike rack, or between trees etc., a vandal may want to disengage the handlebar locking means 100 in order to make the bike 1000 rideable without paying a fee. In this extreme scenario the locking lever 1, the recess 15, disengages from the toothed collar 520 thanks to the geometry of the tooth 521 on collar side and the geometry of the recess 15 (cutout) on the side of the locking lever 1. The side walls of the tooth are at specific angle which allows easily sliding-out. When the specific torque is reached, the locking lever 1 moves up, the recess 15 slips and engages another teeth 521. Thus, the vehicle 1000 is protected from a damage and is not rideable this way. If the recess of the locking lever disengages, the sensor unit 4 will detect a state change in the position of the magnet 11 of the locking lever 1 corresponding to the closed position (2). In such event an alarm signal, e.g. a continuous beep, may be initiated by the electronic sensor unit 4, discouraging or repelling the vandal.

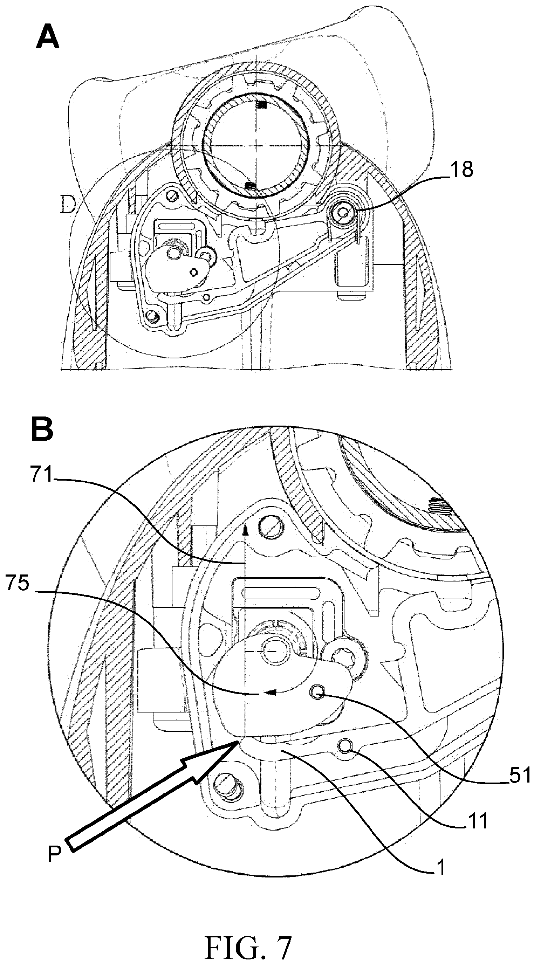

Fig. 7A illustrates that, as already mentioned, the torsion spring 18 at the locking lever 1 is constantly pushing the locking lever 1 away from the toothed collar 520 by forcing a clockwise rotation (cf. Fig. 7B). Fig. 7B shows the encircled detail D of Fig. 7A. In the locked configuration of the locking means 100 there is merely a point contact P of the locking lever 1 and the locking motor driven cam 5 as illustrated by an arrow. Advantageously this point contact P allows protection of an authorized user against an accidental self-locking of the locking means 100 during a ride on a bumpy terrain etc. The locking lever 1 with its torsion spring 18 create permanently a reverse torque 75 of the cam 5 by pushing the cam 5 and forcing a clockwise rotation as illustrated by arrow 71.

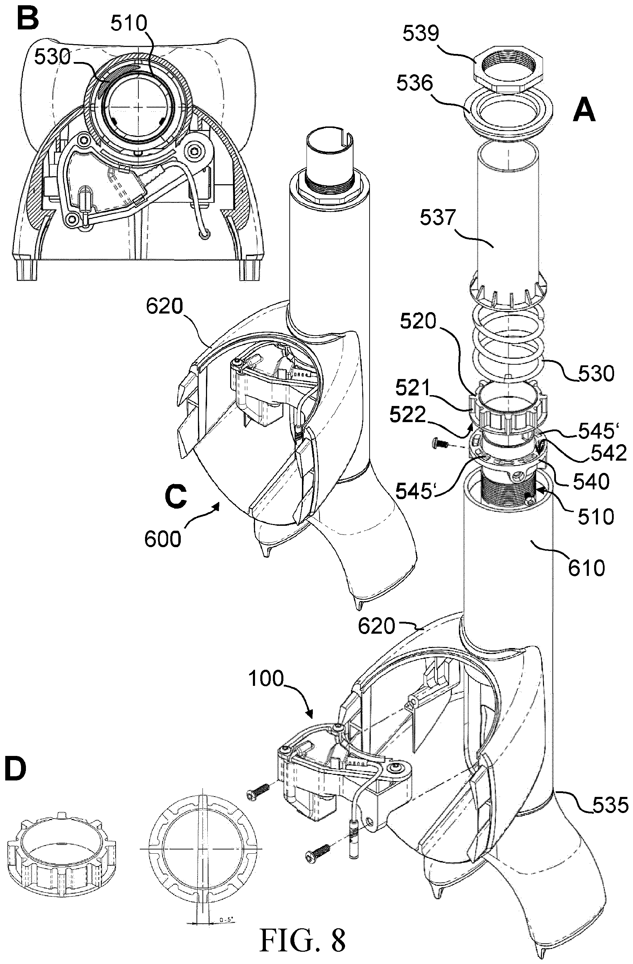

As shown in Fig. 8A the interlocking structures 545 on adjoining surfaces of the race 540 and of the toothed collar 520 are configured to allow a detachable interlocking. According to an embodiment interlocking structures 545 on the adjoining surfaces 542 may comprise on one of the surfaces (e.g. on the race) multiple projections with corresponding multiple recesses on the other contact surface (e.g. on the circumferential rim of the toothed collar 520). According to one embodiment shown in Fig. 8A, the spring 530 may push the toothed collar 520 against the bottom race 540. The bottom race 540 is attached to the steering shaft 510, e.g. by bolts, whereas the toothed collar 520 would (without the compression spring) freely rotate on the steering shaft 510. According to another embodiment the race might also be a top race and the compression spring 530 would be placed beneath the (flipped over) toothed collar. Different interlocking structures may be selected. Even an appropriate roughness of the adjoining surfaces or a rough intermediate washer can be used and the force of the compression spring be appropriately adjusted. In Fig. 8B in addition to the elements shown before in Fig. 3B, the corresponding cross-section of the compression spring 530 appears adjacent to the steering shaft 510. Fig. 8C illustrates the position of the mounted locking means 100 in the down tube 620 of the frame 600 corresponding to Fig. 3A. The construction of the locking means 100 corresponds to the one shown in Fig. 1. Fig. 8D shows the toothed collar 520 and an approximate angle of the surfaces of the teeth 521 of the embodiment with the interlocking contact surfaces of corresponding toothed collar 520 and race 540.

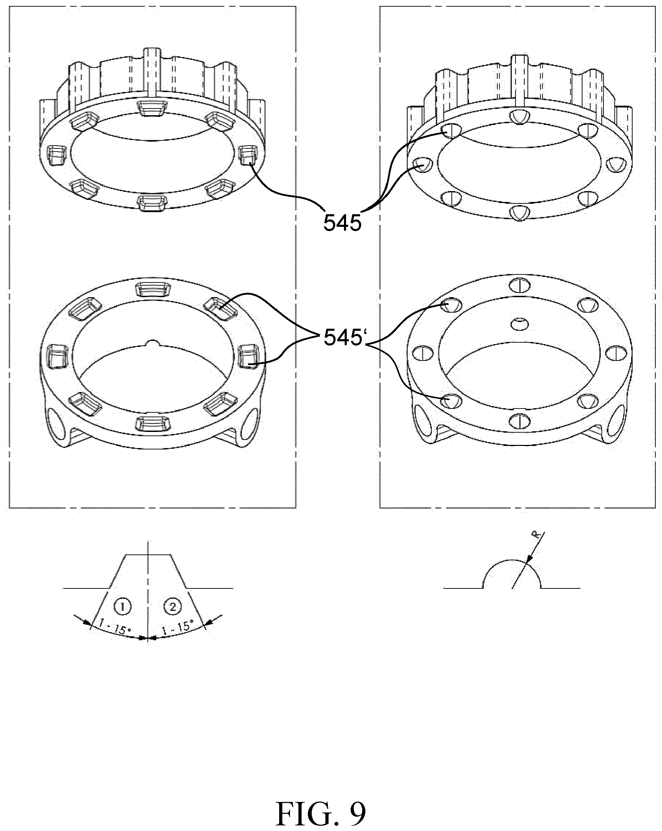

Fig. 9 shows examples of interlocking structures for embodiments of locking means 100 comprising a compression spring 530, spacer 537, and bottom race 540. The angles of the teeth 521 and corresponding recesses can be different. In particular the designated angles 1 and 2 can also be different, for example angle 1 may equal to 5° and angle 2 may equal to 10°. Further, the interlocking structures 545 can be reversed, for example, trapezoidal recess can be arranged both, on the toothed collar contact surface 522 or on the corresponding contact surface 522 of the race 540.

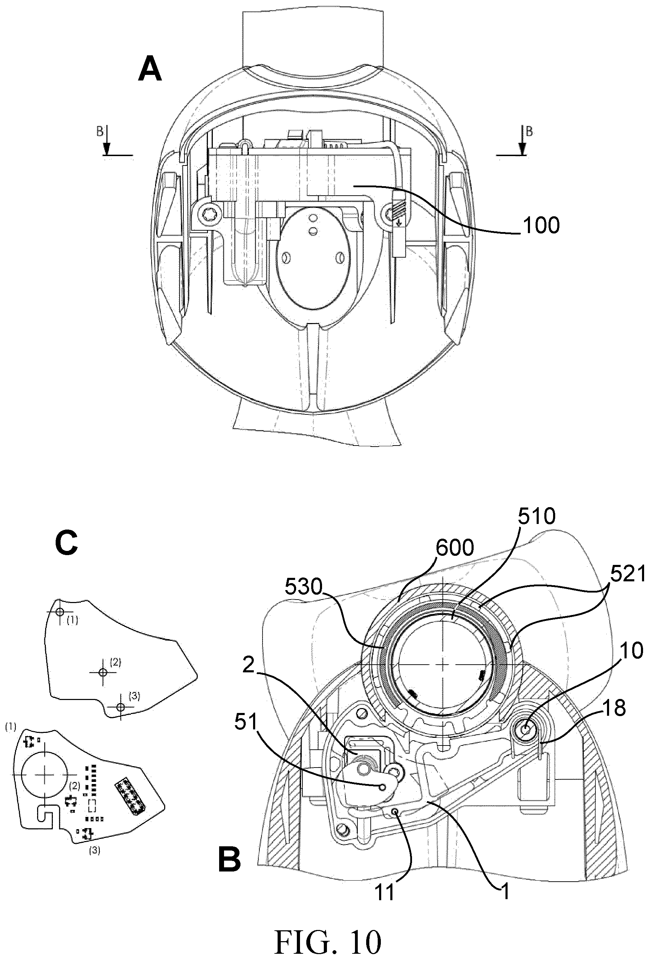

Fig. 10A shows the locking means 100 mounted inside the frame 600 of a vehicle 1000 and indicates the cutting plane BB (see arrows). As can be seen in Fig. 10B, the locking lever 1 of the locking means 100 is in an unlocked position, i.e. held by the cam 5 at a distance to the toothed collar 520 and tooth 521. The cross-section of the compression spring 530 is shown as well. The contour of the PCB above the plane in which both the cam 5 and the locking lever 1 are pivoted is indicated. In the unlocked configuration as shown, the locking lever 1 is in the open position with steering means 500 free to rotate and ready for riding. The Hall sensors on the PCB indicate "unlocked configuration" at position (2) and the locking lever 1 to be at position (3) in "unlocked configuration" as well. Fig. 10C corresponds to Fig. 4C and shows the contour of the electronic sensor unit 4.

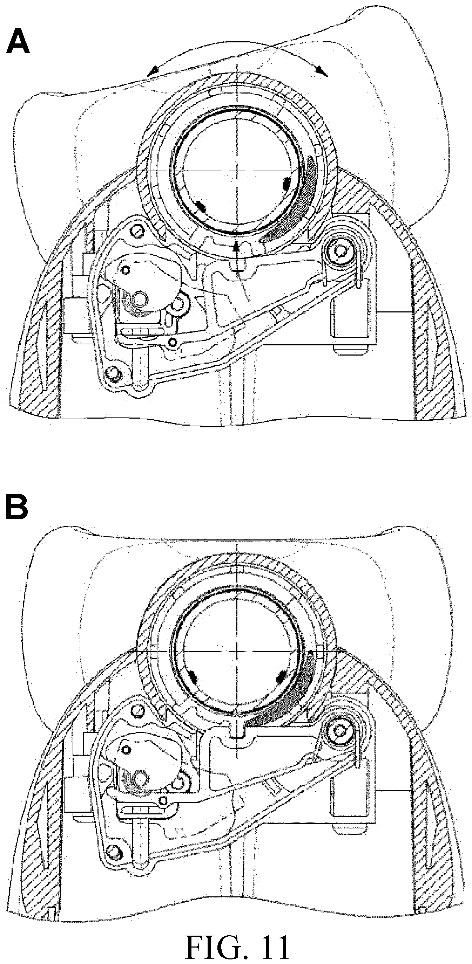

Figs. 11A and 11B correspond to the previous embodiment with a toothed collar 520 which is pressed against the race 540 with a spring 530 and a spacer 537.

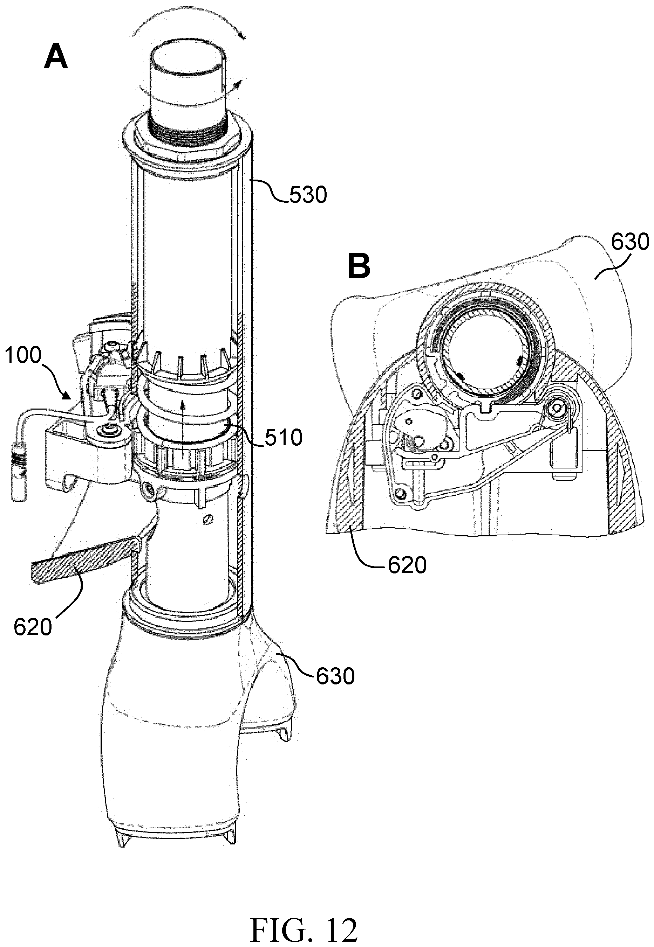

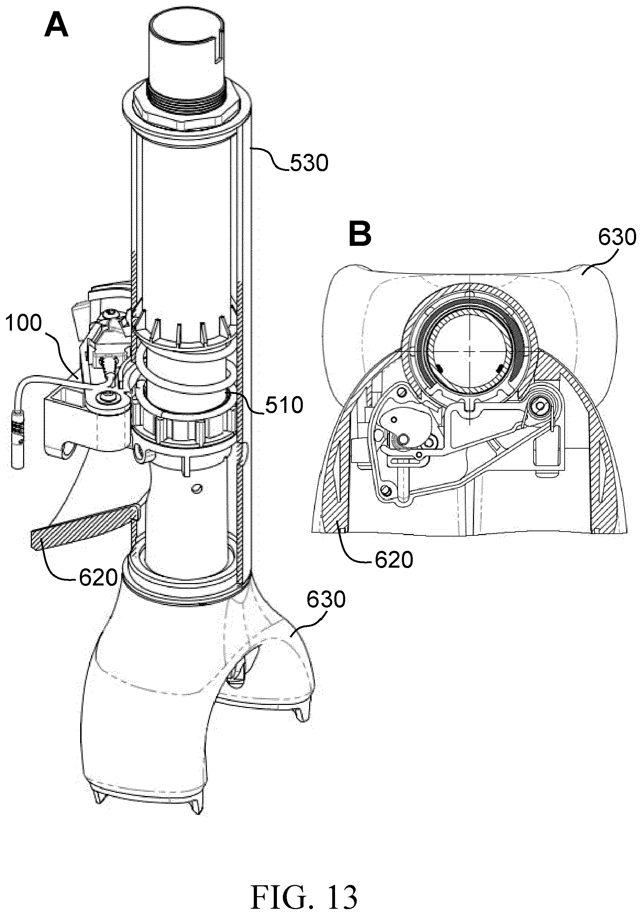

Figs. 12A and 12B show the sliding of the toothed collar 520 over the (bottom) race 540. In the case of extreme torque applied to the steering means against an otherwise held wheel, the toothed collar disengages from the bottom race. The torque applied pushes the slipping clutch up thanks to the geometry of the embosses at the surface of the bottom race 540 and the geometry of corresponding indents (not shown) on the side of a toothed collar 520. When the specific torque is reached the toothed collar moves up, slips and engages again in another position (see steerer tube and fork are in a changed position in Fig. 13).

As shown in Figs. 13A and 13B the locking means 100 still remain in the locked configuration. Advantageously, the locking means 100 are thus protected from a damage and the vehicle 1000 is not rideable. If the lock disengages, the PCB won't detect any state changes. The locking lever 1 will remain in its closed position (2) and the magnet 51 of the cam 5 is determined by the sensor at position (1) corresponding to the locked configuration.

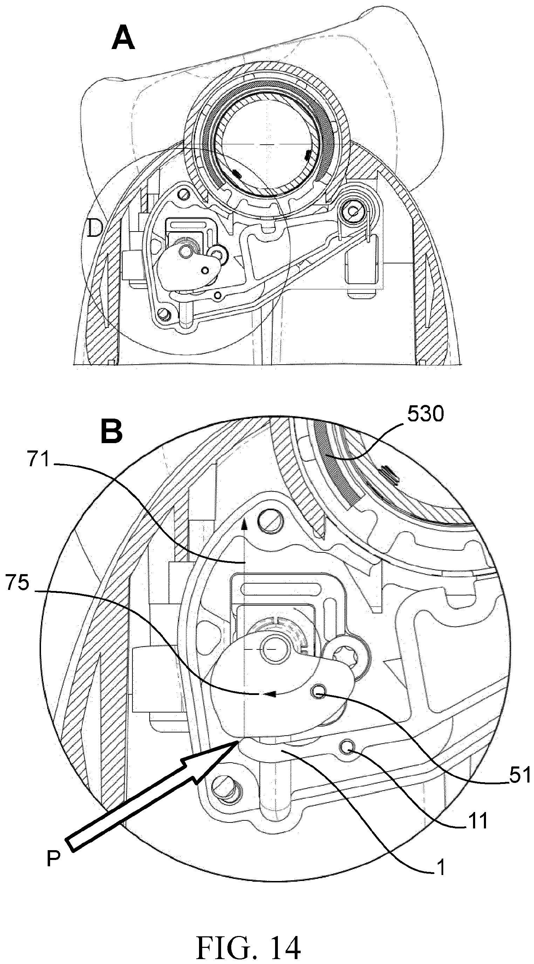

Fig. 14 illustrates the already described anti-self-locking feature, reached by the point contact P between locking lever 1 and cam 5. The detailed description of Figs. 14A and 14B corresponds to the detailed description of Figs. 7A and 7B.

### REFERENCE SIGNS

- 1: locking lever
- 10: rotational axis of locking lever, e.g. a threaded pin serving as axis
- 11: magnet of locking lever
- 15: recess in locking lever
- 18: torsion spring of locking lever
- 2: locking motor
- 22: locking motor clip mount
- 3: drive shaft of locking motor
- 4: electronic sensor unit, comprising: PCB, sensors H1, H2, H3
- 5: cam
- 51: magnet of cam
- 55: circumferential contact surface
- 71: force generated at point contact P
- 75: reverse torque at cam
- 100: locking means
- 110: housing of locking means
- 111: cap of housing
- 500: steering means
- 510: steerer shaft, steerer tube
- 520: toothed collar
- 521: teeth
- 522: contact surface, adjoining surface
- 530: compression spring
- 535: lower cup and bearing
- 536: upper cup and bearing
- 537: spacer
- 539: tightening nut
- 540: race (e.g. bottom race)
- 542: contact surface, adjoining surface
- 545: interlocking structures (convex), corresponding to 545'
- 545': interlocking structure (concave), corresponding to 545
- 550: handle piece
- 600: frame
- 610: head tube
- 620: down tube
- 630: fork
- 650: wheel
- 660: axle
- 1000: vehicle
- H1: sensor
- H2: sensor
- H3: sensor
- P: point contact

The present invention has been explained with reference to various illustrative embodiments and examples. These embodiments and examples are not intended to restrict the scope of the invention, which is defined by the claims and their equivalents. As is apparent to one skilled in the art, the embodiments described herein can be implemented in various ways without departing from the scope of what is invented. Various features, aspects, and functions described in the embodiments can be combined with other embodiments.

According to an aspect, the following clauses describe embodiments of the invention:

### Clauses:

1. A vehicle (1000), comprising:
   - a vehicle control unit comprising a wireless interface;
   - steering means (500);
   - an electronic sensor unit (4);
   - a locking motor (2);
   - locking means (100) for the steering means (500);
      wherein the vehicle (1000) comprises a frame (600) and a wheel (650) having a rotating axle (660), wherein an orientation of the rotating axle is controlled by a rotation of the steering means (500);
      wherein the vehicle control unit is configured to energize the locking motor (2) with a battery current upon a receiving of an unlocking signal by the wireless interface;
      wherein the locking motor (2) comprises a driving shaft (3) and is configured to move the locking means (100) from a locked to an unlocked configuration;
      wherein, the locking means (100) is configured to block the rotation of the steering means (500) in the locked configuration and to allow the rotation of the steering means (500) in the unlocked configuration.
2. The vehicle (1000) according to clause 1, wherein the locking means (100) are configured to switch from the unlocked configuration into a ready to latch configuration, wherein the ready to latch configuration switches to the locked configuration upon the rotation of the steering means (500).
3. The vehicle (1000) according to any of the preceding clauses, wherein the electronic sensor unit (4) is further configured to transmit a status signal about a current configuration of the locking means (100) to the wireless interface.
4. The vehicle (1000) according to any of the preceding clauses, wherein the steering means (500) comprises a handle piece (550) and a steering shaft (510) connected to the rotating axle (660), wherein the steering shaft (510) is rotatable connected to the frame (600) and carries a toothed collar (520) which can be blocked by a locking lever (1) of the locking means (100) in the locked configuration, wherein the locking lever (1) comprises a recess (15) for receiving a teeth (521) of the toothed collar (520).
5. The vehicle (1000) according to clause 4, wherein the cam (5) is eccentrically attached to a driving shaft (3) of the locking motor (2), and a position of the eccentrically attached cam (5) triggers a movement of the locking lever (1) from the locked configuration to the unlocked configuration upon receipt of the unlocking signal by the electronic sensor unit (4).
6. The vehicle (1000) according to clause 5, wherein the cam (5) and/or the locking lever (1) comprise a magnet (51, 11), wherein a position of the magnet (51, 11) is detectable by a sensor (HI, H2, H3) of the electronic sensor unit (4).
7. The vehicle (1000) according to clause 6, wherein the sensor (HI, H2, H3) is a Hall sensor, which is located on a PCB of the electronic sensor unit (4) within a housing (110) of the locking means (100).
8. The vehicle (1000) according to any of clauses 4 - 7, wherein the locking lever (1) is movable in a plane oriented orthogonally to a central axis of the steering shaft (510).
9. The vehicle (1000) according to any of clauses 4 - 8, wherein the toothed collar (520) comprises a plurality of teeth (521) arranged in a circumferential direction on the steering shaft (510) and each having a conical contour.
10. The vehicle (1000) according to clause 9, wherein the conical contour of the teeth (521) is adapted to fit into the recess (15) on the locking lever (1).
11. The vehicle (1000) according to any of clauses 4 - 10, wherein a torsion spring (18) is adapted to permanently push the locking lever (1) towards the toothed collar (520), whereas in the unlocked configuration of the locking means (100), a position of the eccentrically attached cam (5) is blocking an engagement of the recess (15) and the teeth (521) of the toothed collar (520).
12. The vehicle (1000) according to any of clauses 4 - 11, wherein the toothed collar (520) is non-rotatable and directly joined with the steering shaft (510).
13. The vehicle (1000) according to any of clauses 4 - 12, wherein a race adjacent to the toothed collar (521) is directly joined with the steering shaft (510), and a compression shaft spring (530) is pressing an adjoining surface (522) of the toothed collar (520) against an adjoining contact surface (542) of the race (540), wherein the adjoining surfaces (522, 542) comprise interlocking surface structures (545, 545').
14. The vehicle (1000) according to clause 13, wherein the interlocking surface structures (545, 545') comprise protrusions and corresponding recesses which are arranged in a circumferential direction on the adjoining surfaces (522, 542) of the toothed collar (520) and of the race (540), respectively.
15. The vehicle (1000) according to clause 12, wherein the protrusions comprise a shape selected from the group comprising: a pyramid, a half-sphere, a cone, a triangular prism and a bar, and the corresponding recesses are shaped such as to fittingly receive the protrusions.
16. The vehicle (1000) according to any of clauses 1-13, wherein the vehicle is a battery driven electrical vehicle.
17. A method for operating a vehicle, the method comprising:
   - providing a vehicle (1000) according to any of clauses 1-16;
   - receiving by the wireless interface an unlocking signal;
   - energizing, by the vehicle control unit, the locking motor (2); and
   - switching, by the locking motor (2), the locking means (100) of the vehicle (1000) from the locked state to the unlocked state.
18. A method of sharing a vehicle (1000) among a group of users, comprising:
   - providing at least one of a vehicle (1000) according to claims 1-15;
   - sending a request for rental by a qualified user to a server;
   - obtaining an unlocking signal by the wireless interface of the vehicle control unit send by the server;
   - energizing the locking motor (2) of the locking means (100) to switch from a locked configuration of the locking means (100) comprising a blocked rotation of the steering means (500) to an unlocked configuration of the locking means (100) comprising a free rotation of the steering means (500);
   - detecting a sensor signal pattern by an electronic sensor unit (4) corresponding to the unlocked configuration;
   - signaling, to the user, a start of a rental; and
   - ending the rental and switching the locking means (100) from the unlocked configuration in the locked configuration.

## Claims

1. A vehicle (1000), comprising:
- a vehicle control unit comprising a wireless interface;
- steering means (500);
- an electronic sensor unit (4);
- a locking motor (2);
- locking means (100) for the steering means (500);
wherein the vehicle (1000) comprises a frame (600) and a wheel (650) having a rotating axle (660), wherein an orientation of the rotating axle is controlled by a rotation of the steering means (500);
wherein the vehicle control unit is configured to energize the locking motor (2) with a battery current upon a receiving of an unlocking signal by the wireless interface;
wherein the locking motor (2) is configured to switch the locking means (100) from a locked to an unlocked configuration;
wherein, the locking means (100) is configured to block the rotation of the steering means (500) in the locked configuration and to allow the rotation of the steering means (500) in the unlocked configuration.

2. The vehicle (1000) according to claim 1,
wherein the locking means (100) are configured to switch from the unlocked configuration into a ready to latch configuration, wherein the ready to latch configuration switches to the locked configuration upon the rotation of the steering means (500); and
wherein, optionally,
the electronic sensor unit (4) is further configured to transmit a status signal about a current configuration of the locking means (100) to the wireless interface.

3. The vehicle (1000) according to any of the preceding claims, wherein the steering means (500) comprises a handle piece (550) and a steering shaft (510) connected to the rotating axle (660), wherein the steering shaft (510) is rotatable connected to the frame (600) and carries a toothed collar (520) which can be blocked by a locking lever (1) of the locking means (100) in the locked configuration, wherein the locking lever (1) comprises a recess (15) for receiving a teeth (521) of the toothed collar (520).

4. The vehicle (1000) according to claim 3, wherein the cam (5) is eccentrically attached to a driving shaft (3) of the locking motor (2), and a position of the eccentrically attached cam (5) triggers a movement of the locking lever (1) from the locked configuration to the unlocked configuration upon receipt of the unlocking signal by the electronic sensor unit (4).

5. The vehicle (1000) according to claim 4, wherein the cam (5) and/or the locking lever (1) comprise a magnet (51,11), wherein a position of the magnet (51, 11) is detectable by a sensor (HI, H2, H3) of the electronic sensor unit (4);
wherein, optionally,
the sensor (HI, H2, H3) is a Hall sensor, which is located on a printed circuit board of the electronic sensor unit (4) within a housing (110) of the locking means (100), and wherein, optionally,
the locking lever (1) is movable in a plane oriented orthogonally to a central axis of the steering shaft (510).

6. The vehicle (1000) according to any of claims 3 - 5, wherein the toothed collar (520) comprises a plurality of teeth (521) arranged in a circumferential direction on the steering shaft (510) and each having a conical contour.

7. The vehicle (1000) according to claim 6, wherein the conical contour of the teeth (521) is adapted to fit into the recess (15) on the locking lever (1).

8. The vehicle (1000) according to any of claims 3 - 7, wherein a torsion spring (18) is adapted to permanently push the locking lever (1) towards the toothed collar (520), whereas in the unlocked configuration of the locking means (100), a position of the eccentrically attached cam (5) is blocking an engagement of the recess (15) and the teeth (521) of the toothed collar (520).

9. The vehicle (1000) according to any of claims 3 - 8, wherein the toothed collar (520) is non-rotatable and directly joined with the steering shaft (510).

10. The vehicle (1000) according to any of claims 3 - 9, wherein a race adjacent to the toothed collar (521) is directly joined with the steering shaft (510), and a compression shaft spring (530) is pressing an adjoining surface (522) of the toothed collar (520) against an adjoining contact surface (542) of the race (540), wherein the adjoining surfaces (522, 542) comprise interlocking surface structures (545, 545').

11. The vehicle (1000) according to claim 10, wherein the interlocking surface structures (545, 545') comprise protrusions and corresponding recesses which are arranged in a circumferential direction on the adjoining surfaces (522, 542) of the toothed collar (520) and of the race (540), respectively.

12. The vehicle (1000) according to claim 11, wherein the protrusions comprise a shape selected from the group comprising: a pyramid, a half-sphere, a cone, a triangular prism and a bar, and the corresponding recesses are shaped such as to fittingly receive the protrusions.

13. The vehicle (1000) according to any of claims 1-12, wherein the vehicle is a battery driven electrical vehicle.

14. A method for operating a vehicle, the method comprising:
- providing a vehicle (1000) according to any of claims 1-13;
- receiving by the wireless interface an unlocking signal;
- energizing, by the vehicle control unit, the locking motor (2),; and
- switching, by the locking motor (2), the locking means (100) of the vehicle (1000) from the locked state to the unlocked state.

15. A method of sharing a vehicle (1000) among a group of users, comprising:
- providing at least one of a vehicle (1000) according to any of claims 1 - 13;
- sending a request for rental by a qualified user to a server;
- obtaining an unlocking signal by the wireless interface of the vehicle control unit send by the server;
- energizing the locking motor (2) of the locking means (100) to switch from a locked configuration of the locking means (100) comprising a blocked rotation of the steering means (500) to an unlocked configuration of the locking means (100) comprising a free rotation of the steering means (500);
- detecting a sensor signal pattern by an electronic sensor unit (4) corresponding to the unlocked configuration;
- signaling, to the user, a start of a rental; and
- ending the rental and switching the locking means (100) from the unlocked configuration in the locked configuration.
